# DEMANDE DE BREVET EUROPEEN

(11) **EP 0 577 495 A1**
(43) Date de publication de la demande: **05.01.1994**
(21) Numéro de dépôt: 93401670.0
(22) Date de dépôt: 29.06.1993
(51) Int. Cl.: G01B 7/08

(54) **Dispositif et procédé de contrôle de l'épaisseur et de la régularité d'un revêtement déposé sur un corps isolant allongé**

(30) Priorité: 30.06.1992 FR 9208031
(71) Demandeur: ALCATEL FIBRES OPTIQUES, F-95871 Bezons Cedex (FR)
(72) Inventeur: Floch, Bernard, F-60240 Chaumont en Vexin (FR); Mac Kenzie, Patrick, F-75006 Paris (FR)
(74) Mandataire: Pothet, Jean Rémy Emile Ludovic

(57) **Abrégé**

La présente invention concerne un dispositif de contrôle de l'épaisseur et de la régularité d'un revêtement en un matériau conducteur déposé sur un corps isolant allongé, ce dispositif comprenant :
- un capteur sensible à la présence du corps allongé, et appartenant à un circuit électrique alimenté par une tension (24), dite d'alimentation,
- des moyens de mesure (25) pour mesurer en sortie du circuit une quantité électrique fonction de l'épaisseur du revêtement conducteur,
- des moyens de traitement de la quantité électrique pour en déduire l'épaisseur du revêtement conducteur,

caractérisé en ce que le capteur est constitué d'un condensateur (10) comportant deux armatures séparées l'une de l'autre par un entrefer contenant un matériau diélectrique, ce condensateur étant adapté pour permettre au corps allongé de traverser l'entrefer.

## Description

La présente invention concerne un dispositif et un procédé de contrôle de l'épaisseur et de la régularité d'un revêtement déposé sur un corps isolant allongé. Elle concerne plus particulièrement le contrôle de l'épaisseur et de la régularité de revêtements déposés sur une fibre optique.

Il est bien connu de l'homme de l'art que les caractéristiques de transmission des fibres optiques se dégradent sous l'effet de la pénétration d'humidité au sein de la fibre. Pour éviter de telles dégradations, on a recours classiquement à un dépôt sur la fibre de deux revêtements superposés : un premier revêtement en un matériau électriquement conducteur comme le carbone, d'une épaisseur de quelques dizaines de nanomètres, et un deuxième revêtement en un matériau isolant comme une résine polymère, d'une épaisseur de l'ordre de quelques dizaines de microns. Le revêtement de carbone sert de barrière contre l'humidité, et le revêtement de résine sert à protéger le revêtement de carbone.

Pour que la protection de la fibre optique contre la pénétration de l'humidité soit efficace, on comprend bien qu'une épaisseur minimale du revêtement de carbone doit être garantie en tout point. Par ailleurs, il est important que l'épaisseur de la couche de carbone varie le moins possible afin que le diamètre extérieur de la fibre soit régulier. En effet, des irrégularités de diamètre peuvent être à l'origine de contraintes lorsque la fibre optique est installée au contact d'autres fibres et serrée contre elles, ces contraintes conduisant à des augmentations de l'atténuation des fibres voisines.

Pour les mêmes raisons que celles mentionnées au sujet du revêtement de carbone, on cherche à contrôler le revêtement de résine.

Ces contrôles doivent être non destructifs pour les revêtements réalisés, c'est-à-dire ne pas nécessiter de contact mécanique entre le dispositif de contrôle et le corps à contrôler.

De plus, ces contrôles doivent pouvoir être effectués en continu, au fur et à mesure du dépôt de carbone ou de l'enduction de résine, afin de détecter toute anomalie au moment où elle se produit et d'y remédier le plus rapidement possible.

Dans ce contexte, on connaît un dispositif de contrôle de l'épaisseur et de la régularité d'un revêtement conducteur déposé sur une fibre optique, décrit dans la demande de brevet EP-0 395 253. Ce dispositif comporte un circuit RLC alimenté de préférence par une tension de fréquence accordée à sa fréquence de résonance, ce circuit comprenant notamment une bobine inductive disposée de manière à être traversée par la fibre en sortie du dispositif de dépôt du matériau conducteur. La présence dans la bobine d'un corps conducteur provoque une modification des pertes par absorption dans le circuit, qui est à l'origine de variations du coefficient de surtension Q du circuit.

On mesure donc le coefficient de surtension Q, dont la valeur est fonction de la résistance linéique du revêtement déposé, c'est-à-dire de son épaisseur, et dont les variations sont fonction de la régularité du revêtement déposé.

Le dispositif proposé par le brevet EP-0 395 253 n'est toutefois pas satisfaisant.

En effet, en premier lieu, il ne permet pas de contrôler l'épaisseur d'un revêtement non conducteur, en résine par exemple, superposé au revêtement conducteur, car la présence d'un matériau isolant dans la bobine ne modifie pas les pertes par absorption dans cette dernière.

D'autre part, il rend nécessaire l'utilisation d'un condensateur d'ajustage de capacité variable, ce qui complique le circuit électrique et augmente les causes d'erreurs éventuelles.

De plus, les condensateurs d'ajustage sont en général des condensateurs plans dans lesquels on fait varier la surface en regard des armatures ; comme cette surface est relativement importante, les variations du degré d'humidité de l'air ont une influence non négligeable sur la valeur de la capacité d'ajustage.

Par ailleurs, la résolution de ce dispositif est médiocre, c'est-à-dire qu'il ne permet pas en pratique de détecter des défauts très rapprochés. En effet, il faudrait pour cela diminuer le nombre de spires de la bobine jusqu'à utiliser une seule spire, mais on serait limité par le diamètre minimal du fil utilisé pour réaliser cette spire. Pour y remédier, on serait alors contraint d'utiliser le dispositif à des fréquences très élevées, ce qui n'est bien sûr pas souhaitable.

Un but de la présente invention est donc de réaliser un dispositif simple et facile à utiliser, permettant notamment de contrôler l'épaisseur d'un revêtement en un matériau conducteur déposé sur un corps allongé ainsi que celle d'un revêtement en un matériau non conducteur superposé au précédent.

Un autre but de la présente invention est d'éviter l'utilisation d'un condensateur d'ajustage dans un tel dispositif.

Un autre but encore est de réaliser un dispositif ayant une résolution meilleure que celui de l'art antérieur.

La présente invention propose à cet effet un dispositif de contrôle de l'épaisseur et de la régularité d'un revêtement en un matériau conducteur de l'électricité déposé sur un corps isolant allongé, ledit dispositif comprenant :
- un capteur sensible à la présence dudit corps allongé, et appartenant à un circuit électrique résonant alimenté par une tension alternative, dite d'alimentation, ayant une fréquence égale à la fréquence de résonance dudit circuit,
- des moyens de mesure pour mesurer en sortie dudit circuit une quantité électrique fonction de l'épaisseur dudit revêtement en un matériau conducteur,
- des moyens de traitement de ladite quantité électrique pour en déduire l'épaisseur dudit revêtement en un matériau conducteur,

caractérisé en ce que ledit capteur est constitué d'un condensateur comportant deux armatures séparées l'une de l'autre par un entrefer contenant un matériau diélectrique, ledit condensateur étant adapté pour permettre audit corps allongé de traverser ledit entrefer.

La présente invention propose également un dispositif de contrôle de l'épaisseur et de la régularité d'un revêtement en un matériau isolant déposé sur un revêtement en un matériau conducteur lui-même déposé sur un corps isolant allongé, ledit dispositif comprenant :
- un capteur sensible à la présence dudit corps allongé, et appartenant à un circuit électrique résonant alimenté par une tension alternative, dite d'alimentation, ayant une fréquence égale à la fréquence de résonance dudit circuit,
- des moyens de mesure pour mesurer en sortie dudit circuit une quantité électrique fonction de l'épaisseur dudit revêtement en un matériau isolant,
- des moyens de traitement de ladite quantité électrique pour en déduire l'épaisseur dudit revêtement en un matériau isolant,

caractérisé en ce que ledit capteur est constitué d'un condensateur comportant deux armatures séparées l'une de l'autre par un entrefer contenant un matériau diélectrique, ledit condensateur étant adapté pour permettre audit corps allongé de traverser ledit entrefer.

En utilisant comme capteur un condensateur à la place d'une bobine inductive, il est possible de contrôler l'épaisseur d'un revêtement non conducteur de l'électricité déposé sur un premier revêtement en un matériau conducteur lui-même déposé sur un corps isolant allongé. En effet, n'importe quel corps conducteur introduit dans un condensateur en modifie la capacité. Lorsque ce corps est revêtu extérieurement d'un matériau non conducteur de l'électricité, l'épaisseur de ce dernier revêtement peut être mesurée puisque la présence du matériau non conducteur le constituant modifie la permittivité du milieu initialement présent dans le condensateur, et donc les pertes par absorption dans le circuit auquel il appartient.

En outre, l'accord en fréquence du circuit électrique auquel appartient le condensateur à une fréquence de fonctionnement requise peut être facilement effectué par augmentation ou diminution de la largeur de l'entrefer, simplement en éloignant ou rapprochant les armatures du condensateur. Ceci évite d'avoir à utiliser en plus du capteur lui-même un condensateur d'ajustage de capacité variable, comme décrit dans la demande de brevet EP-0 395 253. On limite ainsi le nombre de constituants du circuit électrique du dispositif selon l'invention, ce qui diminue donc les causes d'erreurs éventuelles.

D'autre part, pour avoir une résolution très fine, c'est-à-dire pour pouvoir détecter des défauts très rapprochés, l'entrefer doit être le plus fin possible. Cela ne pose pas de problème avec un condensateur, contrairement aux problèmes non négligeables rencontrés lorsque l'on utilise, comme dans la demande de brevet EP-0 395 253, une bobine comme capteur.

De manière très avantageuse, chacune des armatures du condensateur est tubulaire et cylindrique autour d'un axe longitudinal ; les armatures sont disposées dans le prolongement l'une de l'autre de sorte que leurs axes longitudinaux respectifs sont dans le prolongement l'un de l'autre et que l'espace laissé entre leurs bords en regard constitue l'entrefer du condensateur, et le corps allongé est destiné à être reçu dans le condensateur parallèlement à l'axe longitudinal de ce dernier.

L'utilisation d'un condensateur à armatures cylindriques tubulaires est bien mieux adaptée que l'utilisation d'un condensateur plan lorsque l'on souhaite contrôler le revêtement d'un corps allongé cylindrique, comme une fibre optique par exemple.

En effet, la sensibilité d'un condensateur cylindrique utilisé pour contrôler un corps également cylindrique est plus grande que celle d'un condensateur plan car dans ce dernier, une partie des lignes de champ n'est pas utilisée si le corps à contrôler est cylindrique.

Un autre avantage de l'utilisation d'un condensateur cylindrique pour contrôler un corps cylindrique réside dans le fait que la mesure effectuée est indépendante sur une plage importante de la position du corps dans le condensateur, c'est-à-dire de la distance entre l'axe du corps et celui du condensateur.

En outre, la surface en regard des armatures dans le condensateur à armatures tubulaires cylindriques est faible et donc peu dépendante de l'influence préjudiciable de l'humidité de l'air.

Selon un mode de réalisation possible, le circuit électrique résonant comporte au moins le condensateur précédent et une bobine inductive montés en série ; l'une des armatures du condensateur est alors reliée à la masse et l'autre à l'une des extrémités de la bobine. L'autre extrémité de la bobine est reliée à un générateur d'alimentation du circuit au moyen de la tension d'alimentation, et les moyens de mesure sont montés en parallèle avec le condensateur pour mesurer la tension à ses bornes.

Dans ce cas, on peut, pour adapter le circuit électrique, relier la bobine inductive au générateur par l'intermédiaire d'une résistance, la bobine étant alors reliée au point milieu de cette résistance et d'une deuxième résistance identique reliée à la masse par ailleurs.

Le circuit peut en outre comporter d'autres composants passifs tels que des bobines, des condensateurs, des resistances.

De manière très avantageuse, le corps allongé peut soit être immobile dans le condensateur, soit se déplacer dans le condensateur le long de son axe longitudinal.

Selon une caractéristique additionnelle, les paramètres de l'opération de revêtement peuvent être asservis aux valeurs des épaisseurs mesurées. Ceci permet de contrôler les opérations de revêtement pour ramener le cas échéant l'épaisseur du revêtement au-dessus d'un seuil minimal toléré, ou pour rétablir la régularité du revêtement effectué par exemple.

Pour éviter les perturbations électromagnétiques extérieures, le condensateur peut comporter une troisième armature cylindrique identique aux deux premières, disposée de manière à placer son axe longitudinal dans le prolongement de ceux des deux autres, et séparée de l'une des deux autres armatures, appelée armature intermédiaire, par un entrefer. L'armature intermédiaire est reliée au reste du circuit et les autres armatures à la masse.

Enfin, un blindage métallique peut être disposé autour du condensateur et séparé de ce dernier par un matériau diélectrique. Ce blindage assure également la protection du condensateur contre des perturbations électromagnétiques extérieures éventuelles.

Selon le procédé de contrôle d'un revêtement déposé sur un corps isolant allongé au moyen d'un dispositif selon l'invention, la quantité électrique mesurée étant une tension, les moyens de traitement peuvent calculer l'amplitude de la fonction de transfert obtenue en faisant le rapport entre la tension mesurée par les moyens de mesure et la tension d'alimentation. Cette amplitude est ensuite comparée à des amplitudes de référence correspondant à des épaisseurs connues pour en déduire l'épaisseur du revêtement contrôlé.

Selon un autre procédé de contrôle d'un revêtement déposé sur un corps isolant allongé au moyen d'un dispositif selon l'invention, la quantité électrique mesurée étant une tension, les moyens de traitement peuvent calculer l'amplitude de la fonction de transfert obtenue en faisant le rapport entre la tension mesurée par les moyens de mesure et la tension d'alimentation. Cette amplitude est ensuite comparée à des seuils inférieur et supérieur préalablement déterminés pour contrôler la régularité du revêtement.

Lorsque l'on cherche à mesurer l'épaisseur d'un revêtement en un matériau électriquement conducteur déposé sur un corps isolant, les amplitudes de référence correspondent à celles obtenues pour différents échantillons du même corps isolant revêtus chacun d'une couche d'épaisseur différente et connue de matériau conducteur.

Lorsque l'on cherche à mesurer l'épaisseur d'un revêtement en un matériau isolant déposé sur un revêtement conducteur lui-même déposé sur un corps isolant, les amplitudes de référence correspondent à celles obtenues pour différents échantillons du même corps isolant revêtu de matériau conducteur, revêtus chacun d'une couche de matériau isolant d'épaisseur différente et connue.

Si l'on cherche à contrôler la régularité d'un revêtement en un matériau isolant déposé sur un revêtement conducteur lui-même déposé sur un corps isolant, on remplace dans le calcul de la fonction de transfert la tension mesurée par la différence entre la tension mesurée relative au corps revêtu de matériau conducteur puis de matériau isolant et la tension mesurée relative au corps revêtu de matériau conducteur mais non revêtu de matériau isolant, cette différence étant effectuée entre deux valeurs mesurées sur la même portion du corps, et l'on compare l'amplitude de cette fonction de transfert à des seuils inférieur et supérieur préalablement déterminés pour contrôler la régularité du revêtement isolant.

Pour éviter l'influence sur les mesures effectuées des variations des conditions ambiantes comme la température ou l'humidité par exemple, on peut effectuer une mesure dite différentielle. Pour cela, on remplace, dans le calcul de la fonction de transfert, la tension mesurée par la différence entre la tension mesurée relative au corps isolant revêtu et la tension mesurée relative au corps isolant sans aucun revêtement. La mesure différentielle permet ainsi d'éliminer les influences du milieu ambiant, puisque le dispositif traversé par le corps revêtu et le dispositif traversé par le corps nu sont placés dans les mêmes conditions, c'est-à-dire qu'ils subissent les mêmes influences.

Le dispositif selon l'invention et le procédé le mettant en oeuvre peuvent être appliqués au contrôle d'un revêtement en un matériau électriquement conducteur et d'un matériau isolant déposés sur un corps isolant. Ce corps peut être par exemple une fibre optique, et le matériau conducteur du carbone. L'invention peut être appliquée dans ce cas au contrôle d'un revêtement en résine polymère déposé sur le revêtement de carbone précédent.

D'autres caractéristiques et avantages de la présente invention apparaîtront dans la description suivante d'un dispositif selon l'invention et de son procédé de fonctionnement, donnée à titre illustratif et nullement limitatif.

Dans les figures suivantes :
- la figure 1A représente en coupe transversale un condensateur utilisé comme capteur dans un dispositif selon l'invention,
- la figure 1B représente en coupe longitudinale le condensateur de la figure 1,
- la figure 2A illustre le schéma électrique d'un dispositif possible selon l'invention, utilisant le condensateur des figures 1A et 1B,
- la figure 2B illustre un perfectionnement du schéma électrique précédent,
- la figure 3 illustre schématiquement une installation de dépôt de carbone sur une fibre optique puis d'enduction de cette fibre optique avec une résine de protection, dans laquelle sont utilisés trois dispositifs selon l'invention,
- la figure 4 est une représentation par blocs d'un dispositif selon l'invention,
- la figure 5 est une représentation par blocs d'un système d'asservissement d'un réacteur de dépôt de carbone sur une fibre optique au moyen des caractéristiques relevées par le dispositif D₂ de la figure 3,
- la figure 6 est un schéma électrique d'un perfectionnement d'un condensateur appartenant à un dispositif selon l'invention,
- la figure 7 donne le signal de sortie des moyens de traitement en fonction de la position du corps à contrôler dans le condensateur.

Dans ces figures, les éléments communs portent les mêmes numéros de référence.

Dans tout ce qui suit, on s'attachera à décrire le dispositif et le procédé selon l'invention utilisés pour le contrôle de l'épaisseur d'un revêtement de carbone et d'un revêtement extérieur de résine polymère déposés sur une fibre optique.

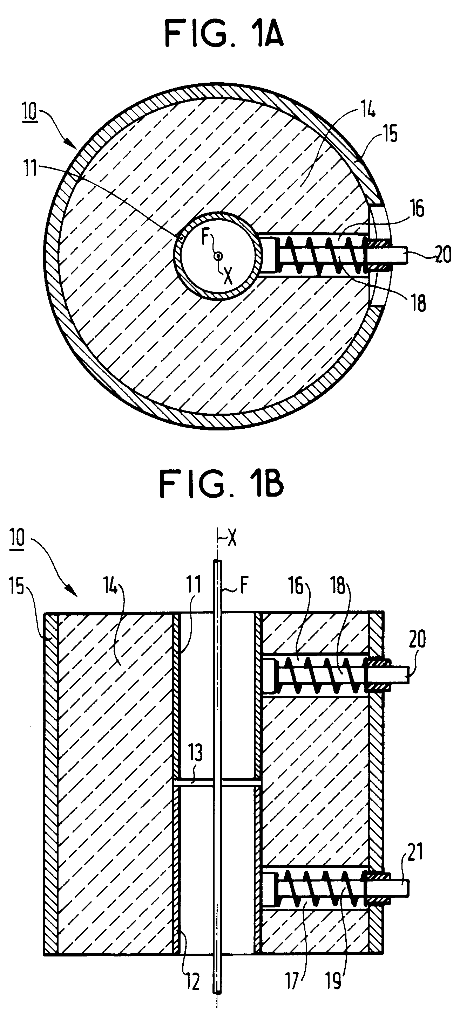

Dans les figures 1A et 1B, un condensateur 10 selon l'invention comporte deux armatures 11 et 12. Chacune de ces armatures est constituée d'un cylindre métallique de diamètre égal à 9 mm et de hauteur égale à 25 mm. Les axes longitudinaux des armatures 11 et 12 sont mis dans le prolongement l'un de l'autre pour constituer l'axe longitudinal X du condensateur 10.

La forme adoptée pour les armatures du condensateur 10 est particulièrement avantageuse. En effet, dans le cas où le corps à contrôler est cylindrique, comme c'est la cas pour une fibre optique, il est préférable que le capteur soit également cylindrique. Si l'on introduit un corps cylindrique dans un condensateur plan par exemple, certaines parties de la surface extérieure de ce corps ne se trouvent pas en regard des armatures, et de ce fait, certaines lignes de champ ne sont pas utilisées, d'où une efficacité médiocre.

Les armatures 11 et 12 sont distantes l'une de l'autre sur l'axe X de quelques dixièmes de millimètre (environ 8 à 10), de manière à former une lame d'air constituant l'entrefer 13 du condensateur 10.

Afin d'éviter l'influence préjudiciable sur les mesures effectuées de perturbations électromagnétiques extérieures éventuelles, les armatures 11 et 12 sont placées dans un manchon cylindrique 14 en un matériau diélectrique, lui-même entouré d'un tube 15 métallique, en aluminium par exemple, pour constituer un blindage électromagnétique. De manière à relier les armatures 11 et 12 au reste du circuit électrique auquel appartient le condensateur 10, deux passages 16 et 17 sont ménagés à travers le manchon 14 et le tube 15 pour loger des raccords métalliques 18 et 19 respectivement en contact avec les armatures 11 et 12 et débouchant à l'extérieur du tube 15 pour former deux bornes 20 et 21 respectivement.

Le dispositif selon l'invention est disposé de sorte qu'une fibre F, ou tout autre corps allongé à contrôler, traverse le condensateur 10 parallèlement à son axe X. La présence de la fibre F avec son revêtement conducteur de carbone provoque une modification de la capacité du condensateur 10. On verra plus loin comment cette modification intervient dans le contrôle de l'épaisseur du revêtement de carbone.

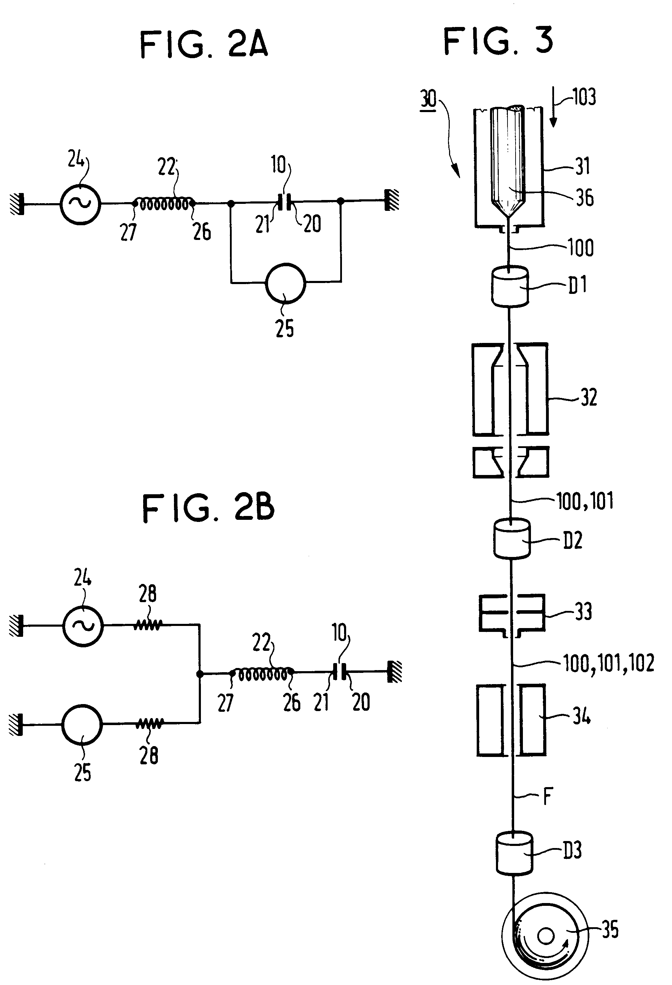

On a représenté en figure 2A le schéma électrique d'un dispositif selon l'invention dans lequel est utilisé le condensateur 10 précédent. Le condensateur 10 est monté en série avec une bobine 22 (possédant une résistance propre non représentée). La borne 20 du condensateur 10 est reliée à la masse, et sa borne 21 à la borne 26 de la bobine 22. La borne 27 de cette dernière est reliée à un générateur 24 fournissant une tension alternative Ve de fréquence égale à la fréquence de résonance du circuit résonant constitué par la bobine 22 et le condensateur 10. Enfin, on a disposé en parallèle avec le condensateur 10 un voltmètre vectoriel (ou un détecteur RF) 25 qui mesure la tension Vs aux bornes de ce dernier (en pratique, le voltmètre 25 fournit l'amplitude et la phase de Vs).

La figure 2B montre un perfectionnement du dispositif précédent. Dans cette figure la borne 27 de la bobine 22 est reliée au point milieu de deux résistances d'adaptation 28. L'une des résistances 28 est reliée au générateur 24 fournissant toujours une tension alternative Ve de fréquence égale à la fréquence de résonance du circuit résonant constitué par le condensateur 10, la bobine 22 et les deux résistances 28. L'autre résistance d'adaptation 28 est reliée au voltmètre 25 lui-même relié à la masse. Ce dernier est donc monté dans le schéma électrique de la figure 2B en parallèle avec l'ensemble constitué par le condensateur 10, la bobine 22 et l'une des résistances 28, mais il peut aussi être monté en parallèle avec le condensateur 10 uniquement. En effet, dans ces deux cas, la tension Vs mesurée est une variable lorsque la fibre F défile dans le condensateur 10.

Le contrôle de l'épaisseur d'un revêtement déposé sur la fibre F repose sur le principe suivant.

Un dispositif selon l'invention tel que celui schématisé à la figure 2A ou 2B est installé de manière à ce que le condensateur 10 reçoive la fibre F (qui peut soit défiler le long de l'axe X, soit être immobile dans le condensateur 10 et placée le long de l'axe X). La présence d'un corps conducteur dans le condensateur 10 provoque une modification de la capacité de ce dernier et donc une augmentation des pertes par absorption dans le circuit, ce qui entraîne des variations de la tension Vs mesurée, elles-mêmes liées à la quantité de matériau conducteur présente dans le condensateur 10. Cette quantité est bien évidemment fonction de l'épaisseur du revêtement de carbone déposé sur la portion de la fibre F se trouvant dans le condensateur 10. En mesurant l'amplitude de la fonction de transfert complexe égale au rapport entre les tensions complexes Vs et Ve, on peut en déduire, à l'aide d'un étalonnage adapté que l'on décrira en détail dans la suite, l'épaisseur du matériau conducteur.

Pour ce qui est du contrôle de l'épaisseur d'un revêtement isolant recouvrant le revêtement conducteur, le principe est pratiquement identique. La présence d'une couche isolante supplémentaire dans le condensateur 10 modifie la permittivité du milieu se trouvant dans le condensateur 10, ce qui crée des pertes par absorption supplémentaires dans le circuit. Ainsi, en mesurant les pertes par absorption dans le circuit, on peut en déduire, également à l'aide d'un étalonnage adapté que l'on décrira en détail dans la suite, l'épaisseur de matériau isolant. Les pertes par absorption peuvent être mesurées par exemple par l'intermédiaire de l'amplitude de la fonction de transfert complexe égale au rapport entre les tensions complexes Vs et Ve.

L'avantage de l'utilisation d'un circuit résonant réside dans le fait que le circuit résonant présente une grande sensibilité aux variations des caractéristiques des éléments (notamment dans la cas de l'invention, du condensateur) qu'il comporte.

On n'entrera pas plus dans les détails du principe de fonctionnement du dispositif selon l'invention. En effet, l'explication théorique précise des phénomènes physiques entraînant des pertes par absorption nécessite de modéliser l'ensemble des condensateurs élémentaires créés par la présence d'un matériau conducteur à la fois dans l'entrefer 13 du condensateur 10 et à l'intérieur des armatures 11 et 12 de ce dernier. Cette modélisation n'est pas utile en pratique car on préfère procéder par étalonnage des dispositifs utilisés.

On va maintenant décrire en détails, en relation avec la figure 3, le fonctionnement du dispositif selon l'invention et la méthode mise en oeuvre pour le contrôle des épaisseurs.

On a représenté très schématiquement en figure 3 un dispositif 30 permettant de réaliser le dépôt sur une fibre optique nue 100 d'un revêtement en carbone 101 puis l'enduction de ce revêtement au moyen d'une résine polymère pour constituer un revêtement protecteur isolant 102. Le dispositif 30 comprend une tête de fibrage 31 dans laquelle une préforme en silice 36 est amenée à sa température de fibrage. A la sortie de la tête de fibrage 31, la fibre 100 obtenue traverse un premier dispositif D₁ selon l'invention, puis un réacteur 32 dans lequel est effectué le dépôt de carbone. Un second dispositif D₂ selon l'invention est placé en sortie du réacteur 32 pour contrôler l'épaisseur du revêtement de carbone 101. La fibre 100 revêtue de carbone traverse ensuite un enducteur 33 réalisant l'enduction de résine polymère. En sortie de l'enducteur 33, la fibre traverse des moyens 34 permettant de polymériser la résine, puis un troisième dispositif D₃ selon l'invention pour contrôler l'épaisseur du revêtement 102. Enfin, la fibre terminée F est enroulée sur un bobinoir 35 de réception.

Les dispositifs D₁, D₂ et D₃ sont strictement identiques et tous alimentés au moyen de la même tension Ve.

Il est très avantageux d'utiliser plusieurs dispositifs selon l'invention strictement identiques, car l'utilisation de condensateurs à armatures tubulaires cylindriques permet d'obtenir aisément un même ajustage pour chacun de ces dispositifs, puisqu'il est facile de contrôler très précisément (au moyen de vis micrométriques par exemple) la largeur des différents entrefers. L'invention présente donc dans ce cas l'avantage supplémentaire d'être reproductible.

Pour mieux comprendre le procédé selon l'invention, on traitera ci-dessous trois exemples. Dans un premier exemple (Exemple 1), on décrira le procédé de contrôle de l'épaisseur du revêtement 101. Dans un deuxième exemple (Exemple 2), on décrira le procédé de contrôle de l'épaisseur du revêtement 102. Enfin, dans un troisième exemple (Exemple 3), on décrira un procédé de contrôle dans lequel les mesures effectuées sont rendues indépendantes de l'influence du milieu ambiant.

Dans la suite, les indices 1, 2 et 3 se rapporteront respectivement aux éléments et grandeurs mesurées des dispositifs D₁, D₂ et D₃.

### Exemple 1

En sortie du réacteur 32, la fibre 100 revêtue de carbone traverse le condensateur 10₂ du dispositif D₂, disposé de sorte que son axe longitudinal X₂ soit confondu avec la direction de défilement de la fibre, indiquée par la flèche 103 en figure 3.

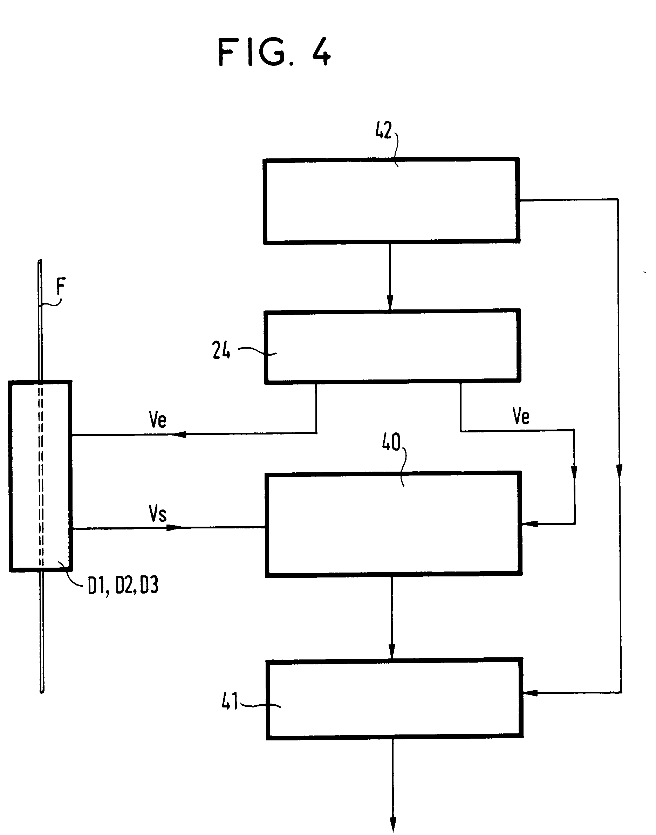

La tension Vs₂ mesurée est alors transmise à des moyens de traitement adaptés 40₂ (voir figure 4) du dispositif D₂ selon l'invention, qui calculent la fonction de transfert complexe H₂ égale au rapport entre les tensions complexes Vs₂ et Ve, et en déduisent un signal utile constitué par une tension continue fonction de l'amplitude maximale HM₂ de H₂, cette fonction étant facilement normalisable, c'est-à-dire que l'on peut aisément en déduire HM₂. La valeur de HM₂ ainsi déterminée est alors comparée au sein d'un comparateur 41₂ à des valeurs de référence déterminées au préalable et mises en mémoire dans un processeur 42₂ contrôlant les différentes opérations du procédé selon l'invention.

Pour la détermination de ces valeurs de référence, on utilise plusieurs échantillons de fibres identiques à la fibre 100 et revêtus chacun d'une couche de carbone d'épaisseur différente connue (ces différentes épaisseurs peuvent par exemple avoir été mesurées au préalable par mesure de la résistance linéique de chaque échantillon, la résistance linéique étant fonction de la quantité de carbone présente sur l'échantillon). On dispose tour à tour chacun de ces échantillons dans le condensateur d'un dispositif selon l'invention identique aux dispositifs D₁, D₂ et D₃, et l'on détermine la valeur de HM pour chacun d'eux. On obtient alors une correspondance entre les valeurs de HM et celles de la résistance linéique de l'échantillon, c'est-à-dire une correspondance entre les valeurs de HM et celles de l'épaisseur du revêtement de carbone, ce qui constitue un étalonnage du dispositif selon l'invention.

Ainsi, la comparaison des valeurs mesurées de HM₂ aux valeurs de référence permet de déduire l'épaisseur moyenne du revêtement 101 sur la portion de fibre se trouvant dans le condensateur 10₂.

On peut alors par exemple tracer une courbe donnant l'épaisseur du revêtement 101 en fonction du point de la fibre considéré, et vérifier si cette épaisseur se trouve au-dessus du seuil minimal toléré. On peut également déduire d'une telle courbe la régularité du revêtement 101 et vérifier que cette dernière satisfait aux critères exigés, c'est-à-dire par exemple que la différence d'épaisseur entre deux points ne dépasse pas un seuil prédéterminé.

Pour contrôler la régularité du revêtement 101, il n'est pas nécessaire de déterminer son épaisseur. En effet, on peut simplement tracer une courbe donnant HM₂ en fonction du point de la fibre considéré, et vérifier qu'il n'y a pas d'écarts dépassant un seuil prédéterminé entre deux points de cette courbe.

### Exemple 2

En sortie des moyens 34, la fibre F traverse le condensateur 10₃ du dispositif D₃, disposé de sorte que son axe longitudinal X₃ soit confondu avec la direction 103.

La tension Vs₃ est transmise aux moyens de traitement 40₃ du dispositif D₃, qui calculent une fonction de transfert complexe.

Deux méthodes de contrôle peuvent alors être utilisées.

Selon une première méthode, on détermine de la même manière que celle décrite dans l'exemple 1 l'amplitude HM₃ de la fonction de transfert complexe H₃ calculée comme le rapport entre la tension Vs₃ mesurée par le voltmètre 25₃ du dispositif D₃ et la tension Ve.

On effectue alors un étalonnage semblable à celui indiqué dans l'exemple 1, en remplaçant les échantillons de fibre nue revêtus de couches de carbone d'épaisseurs différentes par des échantillons de fibre nue tous revêtus d'une même couche de carbone d'épaisseur correspondant à celle souhaitée pour la fibre à tester, puis de couches d'épaisseurs différentes et connues de résine. La comparaison de HM₃ aux valeurs de référence ainsi déterminées permet de déduire l'épaisseur moyenne du revêtement 102 sur la portion de fibre se trouvant dans le condensateur 10₃. Dans cette première méthode, on a supposé que les irrégularités du revêtement de carbone sur la fibre à contrôler sont négligeables lors de la mesure de l'épaisseur du revêtement de résine, ce qui permet d'utiliser des échantillons ayant une épaisseur constante de carbone. Cette supposition peut être considérée comme valable dans la mesure où le revêtement de carbone a une épaisseur de quelques dizaines de nanomètres, ce qui signifie que les défauts d'enduction de carbone ne peuvent dépasser quelques nanomètres d'épaisseur, alors que l'épaisseur du revêtement de résine est de l'ordre de quelques microns.

Selon une deuxième méthode, on peut calculer une autre fonction de transfert H'₃ en remplaçant Vs₃ par la différence entre Vs₃ et la tension mesurée pour la fibre revêtue de carbone uniquement. Afin de tenir compte du décalage spatial entre la mesure de Vs₂ et celle de Vs₃, il est nécessaire d'effectuer un déphasage temporel de Vs₂ (pour obtenir une valeur Vs'₂) avant de soustraire cette valeur à celle de Vs₃. On prend ainsi en compte des tensions mesurées correspondant à une même portion de la fibre.

En utilisant cette deuxième méthode, on élimine l'influence d'éventuelles irrégularités du revêtement de carbone sur le contrôle de l'épaisseur du revêtement de résine.

Les variations de l'amplitude HM'₃ de la fonction de transfert H'₃ permettent alors de contrôler la régularité du revêtement 102.

### Exemple 3

Les dispositifs D₂ et D₃ utilisés sont soumis à l'influence des variations des conditions ambiantes, qui peuvent altérer de manière importante les valeurs mesurées. En effet, la constante diélectrique du matériau constituant l'entrefer (ici, l'air) varie fortement avec le degré d'humidité du milieu ambiant. Pour éviter cet inconvénient, il est possible de faire une mesure dite différentielle.

Ceci revient à remplacer, dans les calculs de fonction de transfert précédemment décrits, les tensions Vs₂ ou Vs₃, ou la différence Vs₃-Vs'₂ respectivement par les différences Vs₂-Vs₁, Vs₃-Vs₁ ou Vs₃-Vs'₂-Vs₁. La tension Vs₁ correspond à la tension "à vide" des dispositifs D₂ et D₃, puisque la fibre traversant D₁ est nue. Les dispositifs D₁, D₂ et D₃ étant soumis aux mêmes conditions ambiantes, la méthode exposée ci-dessus permet d'éliminer par différence l'influence de perturbations extérieures.

L'exploitation des résultats se fait alors de la même manière que dans les deux exemples précédents.

Les valeurs des épaisseurs des revêtements contrôlés selon l'invention peuvent être utilisées pour modifier certains des paramètres du réacteur de dépôt de carbone 32 ou de l'enducteur 33, notamment dans le cas où ces épaisseurs dépassent des seuils établis au préalable.

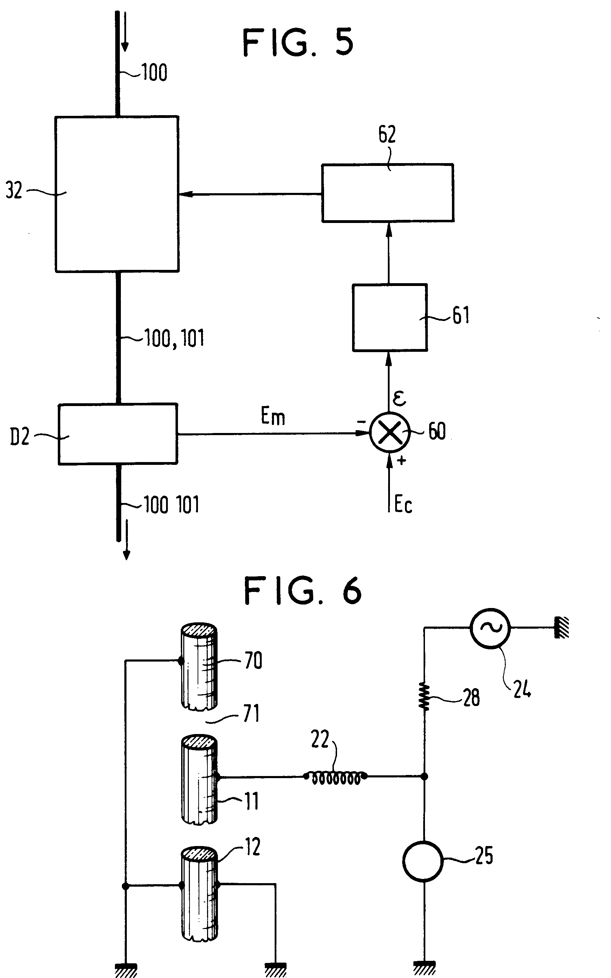

On a représenté en figure 5 un bloc-diagramme très simplifié de l'asservissement des paramètres du réacteur 32 au moyen des valeurs mesurées de l'épaisseur du revêtement 101.

Dans la figure 5, on voit la portion du dispositif 30 comportant le réacteur 32 et le dispositif D₂, traversé par la fibre 100 revêtue de carbone. La valeur Em de l'épaisseur du revêtement 101 déterminée lors de chaque période de mesure est soustraite au niveau d'un soustracteur 60 à une valeur de consigne Ec exigée pour l'épaisseur. La différence obtenue est envoyée sur un système 61 de régulation PID, lequel fournit une instruction de commande à un ensemble de commande 62 des paramètres de dépôt. Ainsi, le dispositif selon l'invention permet de rétablir quasiment immédiatement une anomalie dans le procédé de dépôt.

De la même manière, on peut asservir les paramètres de fonctionnement de l'enducteur 33 aux valeurs des épaisseurs du revêtement 102 déterminées selon l'invention.

Par ailleurs, comme on l'a déjà fait remarquer plus haut, le dispositif selon l'invention peut être utilisé soit pour contrôler une fibre en mouvement, soit pour contrôler une fibre immobile dans le condensateur 10.

Lorsque le contrôle est effectué sur une fibre en mouvement, il faut adapter la bande passante du dispositif de mesure afin d'obtenir la sensibilité (ou la résolution) désirée. En pratique, la valeur maximale de la bande passante du dispositif de mesure est égale au rapport entre la vitesse de défilement de la fibre et la largeur de l'entrefer. La résolution sur la mesure effectuée ne dépend, elle, que de la largeur de l'entrefer. Néanmoins, il est bien évident que le dispositif électronique d'acquisition des mesures et de traitement de ces dernières possède également une bande passante qui peut être plus étroite que celle du dispositif de mesure. Dans ce cas, la bande passante est celle du dispositif de mesure dans son ensemble et limite la vitesse de défilement de la fibre.

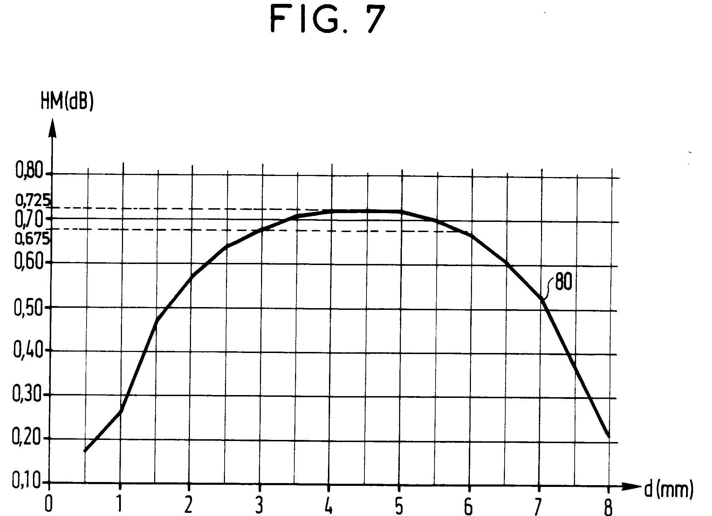

Enfin, la mesure effectuée est indépendante sur une plage importante de la position du corps dans le condensateur. La courbe 80 de la figure 7 illustre ce phénomène. Pour obtenir cette courbe, on a calculé l'amplitude de la fonction de transfert pour une fibre revêtue de carbone immobile dans le condensateur d'un dispositif selon l'invention, cette fibre étant placée dans le condensateur à différentes positions situées dans un même plan diamétral du condensateur et représentées par la distance de l'axe de la fibre à l'une des extrémités d'un diamètre du condensateur. La courbe 80 représente donc HM (en dB) en fonction de cette distance d (en mm), le diamètre du condensateur étant de 9 mm. On a supposé pour l'analyse que la mesure exacte est fournie lorsque l'axe de la fibre est confondu avec celui du condensateur, ce qui est l'hypothèse la plus probable.

Si l'on accepte une erreur de 0,05 dB sur la mesure, ce qui donne une précision tout à fait acceptable, on constate que l'on peut tolérer un déplacement latéral de la fibre pendant la mesure d'une amplitude de 1,5 mm environ de part et d'autre de l'axe du condensateur. Cette propriété est particulièrement intéressante dans le cas où le dispositif selon l'invention est utilisé sur une ligne de production, de dépôt et d'enduction d'une fibre optique, où l'on ne peut éviter de tels déplacements.

Bien entendu, l'invention n'est pas limitée au mode de réalisation qui vient d'être décrit.

En particulier, il est possible d'assurer une protection accrue du condensateur servant de capteur contre les perturbations électromagnétiques extérieures. Ce perfectionnement est représenté en figure 6. Afin de protéger de la même manière l'armature reliée à la masse et celle qui ne l'est pas des perturbations électromagnétiques, on a prévu une troisième armature 70 identique aux armatures 11 et 12 et venant dans le prolongement de l'armature qui n'est pas reliée à la masse, par exemple l'armature 11, en étant espacée de celle-ci par un entrefer 71 constitué d'une lame d'air. Les armatures 70 et 12 sont toutes deux reliées à la masse, et l'armature 11 est reliée électriquement au reste du dispositif. Comme dans le cas du condensateur 10, l'ensemble des trois armatures 11, 12 et 70 est protégé par un manchon diélectrique (non représenté) et par un tube métallique (non représenté), et des passages (non représentés) sont ménagés dans ces derniers éléments pour assurer les connexions électriques nécessaires. Grâce à un tel perfectionnement, le dispositif selon l'invention est pratiquement insensible aux perturbations électromagnétiques extérieures.

Par ailleurs, il n'est pas nécessaire d'utiliser pour la mesure différentielle un dispositif tel que D₁ disposé sur le trajet de la fibre nue. On peut par exemple remplacer ce dispositif par un dispositif indépendant dans lequel on a installé une fibre nue immobile identique à celle fabriquée. Ceci peut parfois faciliter les mesures.

En outre, on a pris le cas d'un circuit LC comme exemple préférentiel de circuit résonant pour le dispositif selon l'invention. Toutefois, tout circuit résonant comportant au moins un condensateur et une bobine inductive peut convenir pour appliquer l'invention.

Il est d'autre part possible de mesurer le coefficient de surtension du circuit au lieu de mesurer la tension Vs, pour déterminer l'épaisseur ou la régularité du revêtement à contrôler.

L'invention peut bien entendu être appliquée à tout autre corps allongé qu'une fibre optique. Elle peut par exemple, mais de manière non limitative, servir au contrôle d'un revêtement métallique déposé sur un fil de nylon.

Enfin, on pourra remplacer tout moyen par un moyen équivalent sans sortir du cadre de l'invention.

## Revendications

**1/** Dispositif de contrôle de l'épaisseur et de la régularité d'un revêtement en un matériau conducteur déposé sur un corps isolant allongé, ledit dispositif comprenant :
- un capteur sensible à la présence dudit corps allongé, et appartenant à un circuit électrique résonant alimenté par une tension alternative, dite d'alimentation, ayant une fréquence égale à la fréquence de résonance dudit circuit,
- des moyens de mesure pour mesurer en sortie dudit circuit une quantité électrique fonction de l'épaisseur dudit revêtement en un matériau conducteur,
- des moyens de traitement de ladite quantité électrique pour en déduire l'épaisseur dudit revêtement en un matériau conducteur,
caractérisé en ce que ledit capteur est constitué d'un condensateur (10) comportant deux armatures séparées l'une de l'autre par un entrefer contenant un matériau diélectrique, ledit condensateur étant adapté pour permettre audit corps allongé de traverser ledit entrefer.

**2/** Dispositif de contrôle de l'épaisseur et de la régularité d'un revêtement en un matériau isolant déposé sur un revêtement en un matériau conducteur lui-même déposé sur un corps isolant allongé, ledit dispositif comprenant :
- un capteur sensible à la présence dudit corps allongé, et appartenant à un circuit électrique résonant alimenté par une tension alternative, dite d'alimentation, ayant une fréquence égale à la fréquence de résonance dudit circuit,
- des moyens de mesure pour mesurer en sortie dudit circuit une quantité électrique fonction de l'épaisseur dudit revêtement en un matériau isolant,
- des moyens de traitement de ladite quantité électrique pour en déduire l'épaisseur dudit revêtement en un matériau isolant,
caractérisé en ce que ledit capteur est constitué d'un condensateur (10) comportant deux armatures séparées l'une de l'autre par un entrefer contenant un matériau diélectrique, ledit condensateur étant adapté pour permettre audit corps allongé de traverser ledit entrefer.

**3/** Dispositif selon l'une des revendications 1 ou 2 caractérisé en ce que chacune desdites armatures (11, 12) est tubulaire et cylindrique autour d'un axe longitudinal (X), lesdites armatures étant disposées dans le prolongement l'une de l'autre de sorte que leurs axes longitudinaux respectifs sont dans le prolongement l'un de l'autre et que l'espace laissé entre leurs bords en regard constitue l'entrefer (13) dudit condensateur (10), et ledit corps allongé (F) étant destiné à être reçu dans ledit condensateur (10) parallèlement à l'axe longitudinal (X) dudit condensateur (10).

**4/** Dispositif selon l'une des revendications 1 à 3 caractérisé en ce que ledit circuit électrique comporte au moins ledit condensateur (10) et une bobine inductive (22) montés en série, l'une desdites armatures étant reliée à la masse et l'autre à l'une des extrémités de ladite bobine (22), l'autre extrémité de ladite bobine (22) étant reliée à un générateur d'alimentation (24) du circuit au moyen de ladite tension d'alimentation, et les moyens de mesure (25) étant montés en parallèle avec le condensateur (10) pour mesurer la tension à ses bornes.

**5/** Dispositif selon la revendication 4 caractérisé en ce que ladite bobine (22) est reliée audit générateur (24) par l'intermédiaire d'une résistance (28), ladite bobine (22) étant relié au point milieu de ladite résistance (28) et d'une deuxième résistance identique (28) reliée à la masse par ailleurs, lesdites résistances (28) servant à l'adaptation dudit circuit.

**6/** Dispositif selon l'une des revendications 1 à 5 caractérisé en ce que ledit corps allongé (F) est immobile dans ledit condensateur (10).

**7/** Dispositif selon l'une des revendications 1 à 5 caractérisé en ce que ledit corps allongé (F) se déplace le long de son axe longitudinal dans ledit condensateur (10).

**8/** Dispositif selon l'une des revendications 1 à 7 caractérisé en ce que les paramètres de l'opération de dépôt dudit revêtement sont asservis aux valeurs des épaisseurs mesurées.

**9/** Dispositif selon l'une des revendications 3 à 8 caractérisé en ce que ledit condensateur comporte une troisième armature cylindrique (70) identique aux deux premières (11, 12), disposée de manière à placer son axe longitudinal dans le prolongement de ceux des deux autres, et séparée de l'une des deux autres, appelée armature intermédiaire (11), par un entrefer (71), ladite armature intermédiaire (11) étant reliée au reste dudit circuit et les autres armatures (12, 70) à la masse.

**10/** Dispositif selon l'une des revendications 1 à 9 caractérisé en ce qu'un blindage métallique (15) est disposé autour dudit condensateur et séparé de ce dernier par un matériau diélectrique (14).

**11/** Procédé de contrôle de l'épaisseur d'un revêtement déposé sur un corps isolant allongé au moyen d'un dispositif selon l'une des revendications 1 à 10 caractérisé en ce que, ladite quantité électrique étant une tension, lesdits moyens de traitement calculent l'amplitude de la fonction de transfert obtenue en faisant le rapport entre ladite tension mesurée par lesdits moyens de mesure et ladite tension d'alimentation, ladite amplitude étant ensuite comparée à des amplitudes de référence correspondant à des épaisseurs connues pour en déduire l'épaisseur du revêtement contrôlé.

**12/** Procédé de contrôle de la régularité d'un revêtement déposé sur un corps isolant allongé au moyen d'un dispositif selon l'une des revendications 1 à 10 caractérisé en ce que, ladite quantité électrique étant une tension, lesdits moyens de traitement calculent l'amplitude de la fonction de transfert obtenue en faisant le rapport entre ladite tension mesurée par lesdits moyens de mesure et ladite tension d'alimentation, ladite amplitude étant ensuite comparée à des seuils inférieur et supérieur préalablement déterminés pour contrôler la régularité dudit revêtement.

**13/** Procédé selon la revendication 11 caractérisé en ce que, lorsque ledit revêtement à contrôler est un revêtement en un matériau électriquement conducteur déposé sur un corps isolant, lesdites amplitudes de référence correspondent à celles obtenues pour différents échantillons dudit corps isolant revêtus chacun d'une couche d'épaisseur différente et connue dudit matériau conducteur.

**14/** Procédé selon la revendication 11 caractérisé en ce que, lorsque ledit revêtement à contrôler est un revêtement en un matériau isolant déposé sur un revêtement conducteur lui-même déposé sur un corps isolant, lesdites amplitudes de référence correspondent à celles obtenues pour différents échantillons dudit corps isolant revêtu de matériau conducteur, revêtus chacun d'une couche dudit matériau isolant d'épaisseur différente et connue.

**15/** Procédé selon la revendication 12 caractérisé en ce que, lorsque ledit revêtement à contrôler est un revêtement en un matériau isolant déposé sur un revêtement en un matériau isolant lui-même déposé sur un corps isolant, on remplace dans le calcul de ladite fonction de transfert, ladite tension mesurée par la différence entre ladite tension mesurée relative audit corps isolant revêtu dudit matériau conducteur puis dudit matériau isolant et la tension mesurée relative audit corps isolant revêtu dudit matériau conducteur mais non revêtu dudit matériau isolant, ladite différence étant effectuée entre deux tensions mesurées sur la même portion dudit corps, et l'on compare l'amplitude de la nouvelle fonction de transfert à des seuils inférieur et supérieur préalablement déterminés pour contrôler la régularité dudit revêtement isolant.

**16/** Procédé selon l'une des revendications 11 à 15 caractérisé en ce que l'on remplace, dans le calcul de ladite fonction de transfert, ladite tension mesurée par la différence entre ladite tension mesurée relative audit corps isolant revêtu et la tension mesurée relative audit corps isolant sans aucun revêtement.

**17/** Application du procédé selon l'une des revendications 11 à 16 caractérisée en ce qu'elle est destinée au contrôle d'un revêtement en un matériau électriquement conducteur déposé sur une fibre optique.

**18/** Application selon la revendication 17 caractérisée en ce que ledit matériau électriquement conducteur est du carbone.

**19/** Application selon l'une des revendications 17 ou 18 caractérisée en ce qu'un revêtement en une résine polymère recouvre ledit revêtement en un matériau électriquement conducteur.

**20/** Installation pour la fabrication d'un corps allongé revêtu d'un matériau conducteur de l'électricité et d'un matériau isolant, comportant :
- des premiers moyens (32) à travers lesquels défile ledit corps (100) pour effectuer sur ledit corps allongé un dépôt de matériau conducteur (101),
- des seconds moyens (33, 34) à travers lesquels défile ledit corps pour revêtir ledit corps allongé (100) recouvert de matériau conducteur (101) d'une couche de matériau isolant (102),
caractérisée en ce qu'elle comporte en outre deux dispositifs de contrôle identiques (D₂, D₃) selon l'une des revendications 1 à 10, un premier desdits dispositifs (D₂) de contrôle étant traversé par ledit corps allongé (F) en sortie desdits premiers moyens (32), et le deuxième desdits dispositifs (D₃) étant traverse par ledit corps allongé (F) en sortie desdits seconds moyens (33, 34).

**21/** Installation selon la revendication 20 caractérisée en ce qu'elle comprend un troisième dispositif de contrôle (D₁) identique aux deux autres et traversé par ledit corps allongé (100) avant que ledit corps traverse lesdits premiers moyens (32).

**22/** Installation selon la revendication 20 caractérisée en ce qu'elle comprend un troisième dispositif de contrôle identique aux deux autres et dans lequel est installé un corps allongé nu et immobile, identique à celui pénétrant dans lesdits premiers moyens.

**23/** Installation selon l'une des revendications 20 à 22 caractérisée en ce que :
- ledit corps allongé est une fibre optique,
- lesdits premiers moyens sont placés en sortie d'un four de fibrage,
- lesdits seconds moyens servent à enduire ladite fibre recouverte de matériau conducteur d'une résine polymérisable et à polymériser ladite résine.
